# FASCICULE DE BREVET EUROPEEN

(11) **EP 1 317 329 B1**
(45) Date de publication et mention de la délivrance du brevet: **05.11.2008**
(21) Numéro de dépôt: 01969863.8
(22) Date de dépôt: 10.09.2001
(51) Int. Cl.: B23B 29/034

(54) **TETE A ALESER**
BOHRKOPF
BORING HEAD

(30) Priorité: 11.09.2000 FR 0011531
(43) Date de publication de la demande: 11.06.2003
(73) Titulaire: E.P.B. (Société par Actions Simplifiée), 67330 Bouxwiller (FR)
(72) Inventeur: TUGEND, Raymond, F-67350 Uberach (FR); FREYERMUTH, Alain, F-67350 Pfaffenhoffen (FR)
(74) Mandataire: Nuss, Pierre
(86) Numéro de dépôt international: PCT/FR2001/002804
(87) Numéro de publication internationale: WO 2002/020203

(56) Documents cités:
- DD-A- 118 542
- FR-A- 2 117 330
- US-A- 4 500 233

## Description

La présente invention concerne le domaine des accessoires de machines-outils, en particulier de machines à commande numérique, de centres d'usinage et de cellules et ateliers flexibles et a pour objet une tête à aléser destinée à l'élargissement de trous présentant et caractéristiques géométriques très rigoureuses, au moyen d'une gamme de porte-plaquettes de type coulisseaux interchangeables, (voir par exemple DD-A-118542).

Il existe actuellement différents dispositifs permettant d'ajuster le diamètre choisi. Cependant, dans ces dispositifs, le blocage de l'ensemble des éléments ne peut être réalisé par un moyen de serrage unique et nécessite, généralement, plusieurs moyens de serrage. En outre, dans des dispositifs pourvus de deux porte-plaquettes ou coulisseaux, le réglage ne peut être indifféremment effectué des deux côtés et il est impossible d'effectuer un ajustement simultané ou indépendant de deux coulisseaux.

La présente invention a pour but de pallier ces inconvénients en proposant une tête à aléser permettant un blocage centralisé des porte-plaquettes ou coulisseaux et un réglage individuel ou simultané desdits coulisseaux.

Pour des raisons de simplicité et de clarté de la description, les porte-plaquettes seront dénommées coulisseaux.

Ce but est atteint par une tête à aléser selon la revendication 1.

L'invention sera mieux comprise, grâce à la description ci-après, qui se rapporte à un mode de réalisation préféré, donné à titre d'exemple non limitatif, et expliqué avec préférence aux dessins schématiques annexés, dans lesquels :
la figure 1 est une vue en élévation latérale et partiellement en coupe d'une tête à aléser conforme à l'invention ;
la figure 2 est une vue en élévation latérale de la tête à aléser suivant la figure 1 tournée de 90° autour de son axe longitudinal, les coulisseaux étant démontés ;
la figure 3 est une vue analogue à celle de la figure 2, partiellement en coupe, les coulisseaux étant montés ;
la figure 4 est une vue en coupe suivant A-A de la figure 2 ;
la figure 5 est une vue en plan d'un coulisseau, et
la figure 6 est une vue en perspective du dispositif de serrage unique.

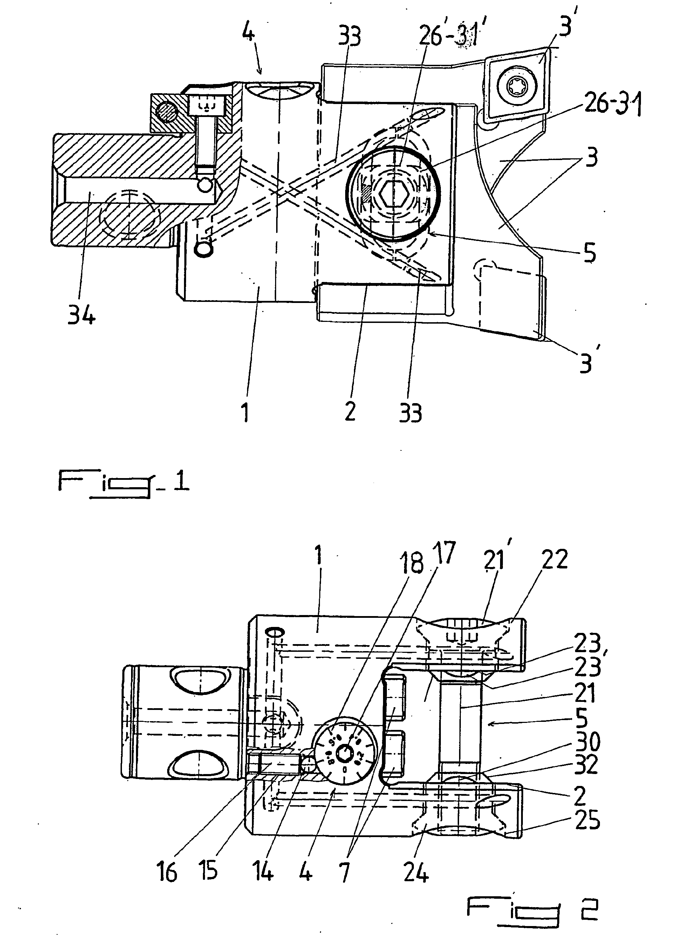

Les figures 1 à 3 des dessins annexés représentent, à titre d'exemple, une tête à aléser, qui est essentiellement constituée par un corps 1 pourvu d'un logement 2 de réception de deux coulisseaux 3, pouvant être entraînés radialement par l'intermédiaire d'un dispositif 4 de déplacement, et par un moyen 5 de blocage en position de service des coulisseaux 3.

Conformément à l'invention, le moyen 5 de blocage en position de service des coulisseaux 3 est constitué par un dispositif de serrage unique agissant simultanément sur les deux coulisseaux 3 et sur le corps 1.

Le logement 2 de réception des coulisseaux 3 se présente, de manière connue, sous forme d'une encoche prismatique s'étendant perpendiculairement à l'axe longitudinal du corps 1 dans l'extrémité avant de ce dernier.

Les coulisseaux 3 sont sous forme de porte-plaquettes identiques ou de hauteur différente et sont munis chacun d'une plaquette d'usinage rapportée par vissage ou par brasage. L'utilisation de coulisseaux de hauteur différente permet, dans le cas d'un usinage avec enlèvement d'une forte épaisseur de copeaux, un décalage de la plaquette réalisant le plus petit diamètre en avant de la plaquette réalisant le plus grand diamètre. Ces coulisseaux 3 sont pourvus chacun, du côté pénétrant au fond du logement 2, d'une rainure d'entraînement 6 destinée à coopérer avec le dispositif de déplacement 4 et s'étendant perpendiculairement au sens de déplacement des coulisseaux 3.

Selon une caractéristique de l'invention, le dispositif de déplacement 4 est avantageusement constitué par une paire de tenons 7 qui, d'une part, pénètrent chacune par une de leurs extrémités dans une rainure d'entraînement correspondante 6 d'un coulisseau 3 et, d'autre part, coopèrent, à leur autre extrémité, avec une vis de réglage 8 et par un moyen 9 de couplage de l'actionnement des vis de réglage 8. Ainsi, par mise en rotation des vis de réglage 8 celles-ci réalisent un déplacement du tenon 7 correspondant et, de ce fait, un déplacement radial du coulisseau 3.

Les vis de réglage 8 sont avantageusement disposées tête-bêche parallèlement au fond du logement 2 du corps 1.

Le moyen 9 de couplage de l'actionnement des vis de réglage 8 est avantageusement constitué par une paire de pignons 10 montés respectivement l'une près de la tête de vis 8' de l'une des vis et l'autre près de l'extrémité libre de l'autre vis 8. De préférence, le pignon 10 monté près de l'extrémité libre de l'une des vis 8 est fixé sur cette dernière par l'intermédiaire d'un dispositif expansible constitué par une vis de serrage 11 à tête tronconique et par l'extrémité fendue 8" de la vis 8. La prévision d'un tel dispositif expansible permet, d'une part, par serrage de la vis 11 à tête tronconique, un blocage en position du pignon 10 sur l'extrémité 8" de la vis 8, suite à l'expansion de ladite extrémité 8" et, d'autre part, la possibilité d'un montage glissant du pignon 10 sur l'extrémité 8", par desserrage partiel de la vis à tête tronconique 11. Dans le premier cas, l'actionnement de l'une des vis 8 aura pour conséquence un entraînement synchrone de l'autre vis 8 et donc un déplacement simultané des deux coulisseaux 3, alors que dans le deuxième cas, chaque coulisseau 3 pourra être déplacé indépendamment par actionnement de la vis de réglage 8 correspondante, le pignon 10 monté sur l'extrémité 8" de l'une des vis étant alors en rotation libre sur cette extrémité. Ce pignon 10 peut alors subir un entraînement n'ayant aucun effet sur la vis 8 sur laquelle il est monté ou restant statique lorsque la vis sur laquelle il est monté est actionnée.

L'actionnement de la vis à tête tronconique 11 peut être effectué à travers un perçage 11' du corps 1 aligné dans l'axe de la vis 8 correspondante.

Les têtes de vis 8' des vis de réglage 8 sont munies chacune d'un moyen de positionnement et de maintien en translation sous forme d'une butée latérale sans jeu constituée par un ensemble de gorges 12 et 13 prévues respectivement dans la tête de vis 8' et dans le corps 1 et par des billes 14. Le montage des billes 14 dans une telle butée latérale, s'effectue, de manière connue, par l'intermédiaire d'un perçage radial ou tangentiel 15 (figure 2) muni d'un bouchon fileté 16. Un tel montage permet un positionnement et un maintien des vis 8 sans jeu, avec possibilité de réglage de la dureté de fonctionnement par un serrage plus ou moins prononcé du bouchon fileté 16.

De manière connue, les têtes de vis 8' de vis de serrage 8 sont pourvues, d'une part, d'un moyen de manoeuvre par clé 17 et, d'autre part, d'un vernier 18. Il en résulte la possibilité de vérifier immédiatement la quantité de déplacement du coulisseau 3 correspondant effectuée lors de l'actionnement de la vis 8.

Par ailleurs, les deux vis 8 étant identiques, et un entraînement synchrone de celles-ci étant possible, le dispositif de déplacement 4 est un dispositif à actionnement bilatéral, ce qui facilite d'autant les manoeuvres de réglage.

Les vis 8 coopérant avec les coulisseaux 3 par l'intermédiaire des tenons 7, les logements des vis 8 et des pignons 10 qui leur sont affectés sont reliés au logement 2 du corps 1 par l'intermédiaire d'un logement de traversée 19. Il en résulte que des impuretés ou déchets provenant de l'usinage peuvent éventuellement pénétrer à travers le logement 19 dans les logements des vis 8. Pour éviter une pénétration de telles impuretés ou déchets entre les dents des pignons 10, les parties correspondantes desdits logements, sont fermés par l'intermédiaire d'une plaquette 20 rapportée contre la face correspondante du pignon 10 monté à l'extrémité libre de l'une des vis 8.

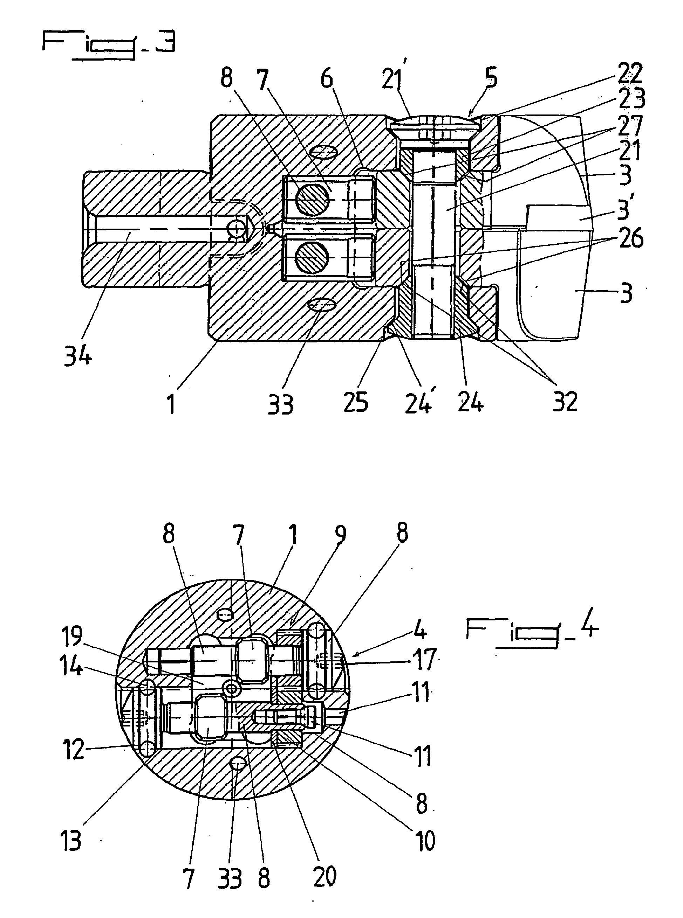

Comme il ressort plus particulièrement de la figure 4 des dessins annexés, le montage de la plaquette 20 peut, par exemple, être réalisé, contre le pignon 10 monté à l'extrémité libre de la vis 8 par disposition de ladite plaquette 20 entre un épaulement de la vis 8 et ledit pignon 10. Un tel montage de plaquette ne nécessite pas une description complémentaire et est parfaitement accessible à l'homme du métier.

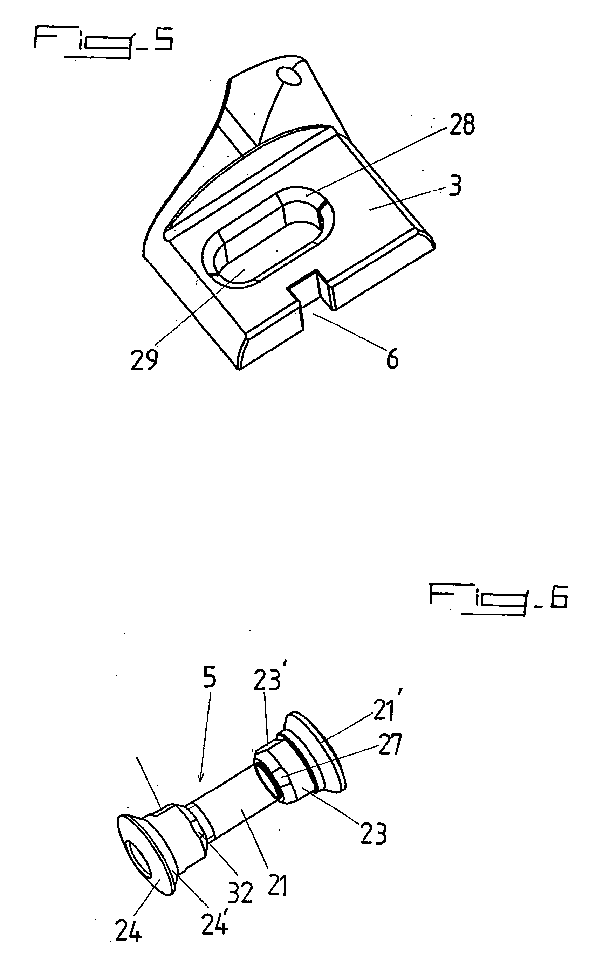

Le dispositif de serrage unique agissant simultanément sur les deux coulisseaux 3 et sur le corps 1, formant le moyen 5 de blocage en position de service desdits coulisseaux 3, qui est représenté plus particulièrement aux figures 1 à 3 et 6 des dessins annexés est constitué par une vis 21 traversant perpendiculairement le logement 2 et les coulisseaux 3 et pourvue d'une tête 21' à portée conique coopérant avec un lamage 22 de l'une des parties du corps 1 délimitant le logement 2, par une bague de serrage 23 s'appuyant sous la tête 21' de la vis 21 et coopérant par son extrémité opposée avec l'un des coulisseaux 3 et par un écrou 24 à portée conique coopérant, d'une part, avec un lamage 25 de l'autre des parties du corps 1 et délimitant le logement 2 et, d'autre part, à son extrémité opposée au lamage 25 avec l'autre coulisseau 3.

Selon une caractéristique de l'invention, la bague de serrage 23 est montée de manière libre en rotation sur la vis 21 et est pourvue de deux méplats diamétralement opposés 23' destinés à coopérer avec les faces 26' d'un trou de passage 26 de section oblongue, dont la longueur excède légèrement le diamètre de la bague 23.

En outre, conformément à une autre caractéristique de l'invention, la bague de serrage 23 est pourvue, à son extrémité opposée à la tête de vis 21', de deux méplats inclinés 27 décalés de 90° par rapport aux méplats 23' et coopérant avec des chanfreins 28 de même inclinaison prévus sur la face correspondante du coulisseau correspondant 3 en périphérie d'un trou oblong 29 de passage de la vis 21.

L'écrou 24 est muni d'une portée conique 24' coopérant avec le fond du lamage 25 et comporte, sous ladite portée conique 24' des méplats diamétralement opposés 30 destinés à coopérer avec les faces 31' d'un trou de passage 31 de section oblongue, dont la longueur excède légèrement le diamètre de l'écrou 24 sous la portée conique 24'.

Par ailleurs, l'écrou 24 est pourvu, à son extrémité opposée à la portée conique 24' de deux méplats inclinés 32 décalés de 90° par rapport aux méplats 30 et coopérant avec des chanfreins 28 de même inclinaison prévus sur la face correspondante du coulisseau correspondant 3 en périphérie d'un trou oblong 29 de passage de la vis 21.

Le trou oblong 29 des coulisseaux 3 présente une largeur supérieure au diamètre de la vis 21, de manière à permettre un débattement des coulisseaux 3 par rapport à la vis 21, suivant l'axe longitudinal du corps 1.

Par serrage de l'écrou 24 sur la vis 21 au moyen d'un outil coopérant, par exemple, avec la tête 21' de la vis 21, l'écrou 24 et la bague de serrage 22 sont poussés dans les chanfreins 28 prévus en périphérie des trous oblongs 29 des coulisseaux 3 et serrent ces derniers l'un contre l'autre par leur face adjacente. Dans ce même mouvement de rapprochement de l'écrou 24 et de la bague 22, la coopération des méplats inclinés 27 et 32 de la bague 22 et de l'écrou 24 avec l'un des chanfreins 28 d'un même côté des trous oblongs 29 a pour effet de provoquer un déplacement simultané des coulisseaux 3 tendant à les plaquer, d'une part, contre la face avant du corps 1 et, d'autre part, préférentiellement contre le fond du logement 2. Il en résulte que les coulisseaux 3 sont parfaitement bloqués en position de service et maintenus contre tous risques de pivotement sur le corps 1 par application des faces correspondantes.

Conformément à une autre caractéristique de l'invention, les lamages 22 et 25 de réception de la tête de vis 21' et de l'écrou 24 présentent un chanfrein de fond bombé destiné à coopérer avec les portées coniques correspondantes de la tête de vis 21' et 24' de l'écrou 24.

La prévision de surfaces de contact à portée conique entre la tête de vis 21' et le lamage 22, ainsi qu'entre l'écrou 24 et le lamage 25 permet de garantir une application optimale de l'effort de serrage en vue du blocage des coulisseaux 3, tout en assurant un degré de liberté en cas de légers mésalignents entre les axes des trous oblongs 29 des coulisseaux 3. De plus, la constitution même du dispositif de serrage unique agissant simultanément sur les deux coulisseaux 3 et sur le corps 1, formant le moyen 5 de blocage en position de service desdits coulisseaux 3 et celle des lamages 22 et 25 permettent indifféremment le montage de ce moyen 5 par l'un ou l'autre côté de la partie avant du corps 1.

Selon une autre caractéristique de l'invention, et comme le montrent plus particulièrement les figures 1 à 3 des dessins annexés, le corps 1 est équipé, en outre, d'un dispositif de lubrification centrale constitué par des canaux 33 forés dans ledit corps 1 et aboutissant à l'extrémité avant de ce dernier, près des plaquettes de coupe 3' des coulisseaux 3, cesdits canaux 33 étant reliés, à l'extrémité arrière du corps 1 à un canal central d'alimentation 34.

Ainsi, il est possible d'amener le lubrifiant de coupe à proximité immédiate des outils de coupe, ce sans qu'il n'y ait contact entre ledit lubrifiant et les pièces mécaniques de réglage et de blocage de la tête à aléser.

Grâce à l'invention, il est possible de réaliser une tête à aléser permettant l'utilisation de coulisseaux identiques ou de taille différente pour un travail en décalé et garantissant un réglage et un blocage particulièrement précis et fiable desdits coulisseaux. En outre, du fait de la prévision d'un réglage bilatéral simultané et d'un blocage au moyen d'un dispositif unique, la mise en oeuvre d'une telle tête à aléser est particulièrement simple et rapide et les coûts correspondants sont réduits en conséquence.

## Revendications

1. Tête à aléser, essentiellement constituée par un corps (1) pourvu d'un logement (2) de réception de deux coulisseaux (3), pouvant être entraînés radialement par l'intermédiaire d'un dispositif (4) de déplacement, et par un moyen (5) de blocage en position de service des coulisseaux (3), qui est constitué par un dispositif de serrage unique agissant simultanément sur les deux coulisseaux (3) et sur le corps (1), les coulisseaux (3) étant pourvus chacun, du côté pénétrant au fond du logement (2), d'une rainure d'entraînement (6), destinée à coopérer avec le dispositif de déplacement (4) et s'étendant perpendiculairement au sens de déplacement des coulisseaux (3), ledit dispositif de déplacement (4) étant un dispositif à actionnement bilatéral constitué par une paire de tenons (7) qui, d'une part, pénètrent chacun par une de leurs extrémités dans une rainure d'entraînement correspondante (6) d'un coulisseau (3) et, d'autre part, coopèrent, à leur autre extrémité, avec une vis de réglage (8), **caractérisée en ce que** le dispositif à actionnement bilatéral formant ledit dispositif de déplacement (4) comporte un moyen (9) de couplage de l'actionnement des vis de réglage (8), qui sont disposées tête-bêche parallèlement au fond du logement (2) du corps (1).

2. Tête à aléser, suivant la revendication 1, **caractérisée en ce** le moyen (9) de couplage de l'actionnement des vis de réglage (8) est constitué par une paire de pignons (10) montés respectivement l'un près de la tête de vis (8') de l'une des vis et l'autre près de l'extrémité libre de l'autre vis (8).

3. Tête à aléser, suivant la revendication 2, **caractérisée en ce que** le pignon (10) monté près de l'extrémité libre de l'une des vis (8) est fixé sur cette dernière par l'intermédiaire d'un dispositif expansible constitué par une vis de serrage ( 11 ) à tête tronconique et par l'extrémité fendue (8") de la vis (8).

4. Tête à aléser, suivant l'une quelconque des revendications 1 à 3, **caractérisée en ce que** les têtes de vis (8') des vis de réglage (8) sont munies chacune d'un moyen de positionnement et de maintien en translation sous forme d'une butée latérale sans jeu constituée par un ensemble de gorges (12 et 13) prévues respectivement dans la tête de vis (8') et dans le corps (1) et par des billes (14).

5. Tête à aléser, suivant l'une quelconque des revendications 1 à 4, **caractérisée en ce que** les logements des vis (8) et des pignons (10) qui leur sont affectés sont reliés au logement (2) du corps (1) par l'intermédiaire d'un logement de traversée (19).

6. Tête à aléser, suivant la revendication 5, **caractérisée en ce que** les logements des vis (8) et des pignons (10) renfermant les pignons (10) sont fermés par l'intermédiaire d'une plaquette (20) rapportée contre la face correspondante du pignon (10) monté à l'extrémité libre de l'une des vis (8).

7. Tête à aléser, suivant la revendication 1, **caractérisée en ce que** le dispositif de serrage unique agissant simultanément sur les deux coulisseaux (3) et sur le corps (1), formant le moyen (5) de blocage en position de service desdits coulisseaux (3), est constitué par une vis (21) traversant perpendiculairement le logement (2) et les coulisseaux (3) et pourvue d'une tête (21') à portée conique coopérant avec un lamage (22) de l'une des parties du corps (1) délimitant le logement (2), par une bague de serrage (23) s'appuyant sous la tête (21') de la vis (21) et coopérant par son extrémité opposée avec l'un des coulisseaux (3) et par un écrou (24) à portée conique coopérant, d'une part, avec un lamage (25) de l'autre des parties du corps (1) et délimitant le logement (2) et, d'autre part, à son extrémité opposée au lamage (25) avec l'autre coulisseau (3).

8. Tête à aléser, suivant la revendication 7, **caractérisée en ce que** la bague de serrage (23) est montée de manière libre en rotation sur la vis (21) et est pourvue de deux méplats diamétralement opposés (23') destinés à coopérer avec les faces (26') d'un trou de passage (26) de section oblongue, dont la longueur excède légèrement le diamètre de la bague (23).

9. Tête à aléser, suivant l'une quelconque des revendications 7 et 8, **caractérisée en ce que** la bague de serrage (23) est pourvue, à son extrémité opposée à la tête de vis (21'), de deux méplats inclinés (27) décalés de 90° par rapport aux méplats (23') et coopérant avec des chanfreins (28) de même inclinaison prévus sur la face correspondante du coulisseau correspondant (3) en périphérie d'un trou oblong (29) de passage de la vis (21).

10. Tête à aléser, suivant la revendication 9, **caractérisée en ce que** l'écrou (24) est muni d'une portée conique (24') coopérant avec le fond du lamage (25) et comporte, sous ladite portée conique (24') des méplats diamétralement opposés (30) destinés à coopérer avec les faces (31') d'un trou de passage (31) de section oblongue, dont la longueur excède légèrement le diamètre de l'écrou (24) sous la portée conique (24').

11. Tête à aléser, suivant l'une quelconque des revendications 7 et 10, **caractérisée en ce que** l'écrou (24) est pourvu, à son extrémité opposée à la portée conique (24') de deux méplats inclinés (32) décalés de 90° par rapport aux méplats (30) et coopérant avec des chanfreins (28) de même inclinaison prévus sur la face correspondante du coulisseau correspondant (3) en périphérie d'un trou oblong (29) de passage de la vis (21).

12. Tête à aléser, suivant l'une quelconque des revendications 9 et 11, **caractérisée en ce que** le trou oblong (29) des coulisseaux (3) présente une largeur supérieure au diamètre de la vis (21), de manière à permettre un débattement des coulisseaux (3) par rapport à la vis (21), suivant l'axe longitudinal du corps (1).

13. Tête à aléser, suivant l'une quelconque des revendications 7 et 10, **caractérisée en ce que** les lamages (22 et 25) de réception de la tête de vis (21') et de l'écrou (24) présentent un chanfrein de fond bombé destiné à coopérer avec les portées coniques correspondantes de la tête de vis (21' et 24') de l'écrou (24).

14. Tête à aléser, suivant la revendication 1, **caractérisée en ce que** le corps (1) est équipé, en outre, d'un dispositif de lubrification centrale constitué par des canaux (33) forés dans ledit corps (1) et aboutissant à l'extrémité avant de ce dernier, près des plaquettes de coupe (3') des coulisseaux (3), cesdits canaux (33) étant reliés, à l'extrémité arrière du corps (1) à un canal central d'alimentation (34).

## Claims

1. Boring head, essentially constituted by a body (1) provided with a housing (2) for receiving two slide blocks (3) which may be driven radially through a movement device (4), and by means (5) for locking the slide blocks (3) in the position of use which are constituted by a single clamping device acting simultaneously on the two slide blocks (3) and on the body (1), the slide blocks (3) each being provided, on the side penetrating the bottom of the housing (2), with an entraining groove (6) intended to cooperate with the movement device (4) and extending perpendicularly in relation to the movement direction of the slide blocks (3), said movement device (4) being a bilateral actuation device constituted by a pair of tenons (7) which, on the one hand, each penetrate with one of their ends a corresponding entraining groove (6) of a slide block (3) and on the other hand cooperate at their other end with a control screw (8), **characterised in that** the bilateral actuation device forming said movement device (4) comprises means (9) for coupling the actuation of the control screws (8) which are arranged head to tail parallel to the bottom of the housing (2) of the body (1).

2. Boring head according to claim 1, **characterised in that** the means (9) for coupling the actuation of the control screws (8) are constituted by a pair of pinions (10) respectively mounted one close to the screw head (8') of one of the screws and the other close to the free end of the other screw (8).

3. Boring head according to claim 2, **characterised in that** the pinion (10) mounted close to the free end of one of the screws (8) is fixed to the latter through an expansible device constituted by a clamping screw (11) with a truncated cone shaped head and by the split end (8") of the screw (8).

4. Boring head according to one of the claims 1 to 3, **characterised in that** the screw heads (8') of the control screws (8) are each equipped with means for positioning and maintaining in translation in the form of a lateral thrust without play constituted by a set of throat elements (12 and 13) provided respectively in the screw head (8') and in the body (1) and by ball elements (14).

5. Boring head according to any one of the claims 1 to 4, **characterised in that** the housings of the screws (8) and the pinions (10) which are assigned to them are connected to the housing (2) of the body (1) through a passage housing (19).

6. Boring head according to claim 5, **characterised in that** the housings of the screws (8) and the pinions (10) enclosing the pinions (10) are closed by a plate (20) joined against the corresponding face of the pinion (10) mounted at the free end of one of the screws (8).

7. Boring head according to claim 1, **characterised in that** the single clamping device acting simultaneously on the two slide blocks (3) and on the body (1), forming the means (5) for locking said slide blocks (3) in the position of use, is constituted by a screw (21) perpendicularly crossing the housing (2) and the slide blocks (3) and provided with a head (21') with a conical bearing surface cooperating with a counter boring (22) of one of the parts of the body (1) delimiting the housing (2), by a clamping ring (23) resting below the head (21') of the screw (21) and cooperating with its opposite end with one of the slide blocks (3) and by a nut (24) with a conical bearing surface cooperating on the one hand with a counter boring (25) of the other part of the body (1) and delimiting the housing (2) and on the other hand at its end opposing the counter boring (25) with the other slide block (3).

8. Boring head according to claim 7, **characterised in that** the clamping ring (23) is mounted freely in rotation on the screw (21) and is provided with two diametrically opposed flat elements (23') intended to cooperate with the faces (26') of a passage hole (26) with a rectangular cross-section, of which the length slightly exceeds the diameter of the ring (23).

9. Boring head according to one of the claims 7 and 8, **characterised in that** the clamping ring (23) is provided, at its end opposite the screw head (21'), with two inclined flat elements (27) offset by 90° in relation to the flat elements (23') and cooperating with chamfers (28) of the same inclination provided on the corresponding face of the corresponding slide block (3) on the periphery of a rectangular hole for passage of the screw (21).

10. Boring head according to claim 9, **characterised in that** the nut (24) is equipped with a conical bearing surface (24') cooperating with the bottom of the counter boring (25) and comprises on said conical bearing surface (24') flat elements that are diametrically opposed (30) intended to cooperate with the faces (31') of a passage hole (31) of rectangular cross-section, of which the length slightly exceeds the diameter of the nut (24) below the conical bearing surface (24').

11. Boring head according to one of the claims 7 and 10, **characterised in that** the nut (24) is provided, at its end opposite the conical bearing surface (24'), with two inclined flat elements (32) offset by 90° in relation to the flat elements (30) and cooperating with chamfers (28) of the same inclination provided on the corresponding face of the corresponding slide block (3) at the periphery of a rectangular hole (29) for passage of the screw (2 1 ).

12. Boring head according to one of the claims 9 and 11, **characterised in that** the rectangular hole (29) of the slide blocks (3) has a width that is greater than the diameter of the screw (21) so as to allow a displacement of the slide blocks (3) relative to the screw (21) along the longitudinal axis of the body (1).

13. Boring head according to one of the claims 7 and 10, **characterised in that** the counter borings (22 and 25) for receiving the screw head (21') and the nut (24) have a chamfer with a cambered bottom intended to cooperate with the corresponding conical bearing surfaces of the screw head (21' and 24') and of the nut (24).

14. Boring head according to claim 1, **characterised in that** the body (1) is also equipped with a central lubrication device constituted by channels (33) bored in said body (1) and leading to the front end thereof, close to the cutting plates (3') of the slide blocks (3), said channels being connected at the rear end of the body (1) to a central feed channel (34).

## Patentansprüche

1. Bohrkopf, im wesentlichen gebildet aus einem Körper (1), der mit einer Aussparung (2) für die Aufnahme von zwei Kulissenschiebern (3) versehen ist, die mittels einer Verschiebevorrichtung (4) radial angetrieben werden können, und einem Mittel (5) für die Blockierung der Kulissenschieber (3) in einer Arbeitsposition, das durch eine einzelne Spannvorrichtung, die simultan auf die zwei Kulissenschieber (3) und auf den Körper (1) wirkt, gebildet ist, wobei jeder der Kulissenschieber (3) an der Seite, die zum Boden der Aussparung (2) hineinreicht, mit einer Führungskerbe (6) versehen ist, die dazu bestimmt ist, mit der Verschiebevorrichtung (4) zusammenzuwirken, und die sich senkrecht zur Verschieberichtung der Kulissenschieber (3) erstreckt, wobei besagte Verschiebevorrichtung (4) eine Vorrichtung für eine zweiseitige Betätigung ist und aus einem Paar Zapfen (7), die einerseits jeder mit einem ihrer Enden in eine Führungskerbe (6) eines korrespondierenden Kulissenschiebers (3) hineinreichen und andererseits an ihrem anderen Ende mit einer Einstellschraube (8) zusammenwirken, besteht, **dadurch gekennzeichnet, dass** die Vorrichtung zur bilateralen Betätigung, die die besagte Verschiebevorrichtung (4) bildet, ein Kupplungsmittel (9) für die Betätigung der Einstellschrauben (8), die umgekehrt parallel am Boden der Aussparung (2) des Körpers (1) angeordnet sind, umfasst.

2. Bohrkopf gemäß Anspruch 1, **dadurch gekennzeichnet, dass** das Kupplungsmittel (9) für die Betätigung der Einstellschrauben (8) durch ein Paar Ritzel (10) gebildet ist, von denen entsprechend eines nahe des Schraubenkopfes (8') von einer der Schrauben und das andere nahe des freien Endes der anderen Schraube (8) montiert ist.

3. Bohrkopf gemäß Anspruch 2, **dadurch gekennzeichnet, dass** das Ritzel (10), welches nahe des freien Endes von einer der Schrauben (8) montiert ist, auf dieser letzten mittels einer expandierbaren Vorrichtung montiert ist, die durch eine Spannschraube (11) mit Kegelsenkkopf und durch das geschlitzte Ende (8") der Schraube (8) gebildet wird.

4. Bohrkopf gemäß einem beliebigen der Ansprüche 1 bis 3, **dadurch gekennzeichnet, dass** jeder der Schraubenköpfe (8') der Einstellschrauben (8) mit einem Mittel für die Positionierung und die Beibehaltung der Verschiebung in der Form eines seitlichen Anschlags ohne Spiel ausgestattet ist, das durch einen Satz von Vertiefungen (12 und 13), die entsprechend in dem Schraubenkopf (8') und in dem Körper (1) vorgesehen sind, sowie Kügelchen (14) gebildet wird.

5. Bohrkopf gemäß einem beliebigen der Ansprüche 1 bis 4, **dadurch gekennzeichnet, dass** die Aussparungen der Schrauben (8) und der Ritzel (10), die ihnen zugeordnet sind, mit der Aussparung (2) des Körpers (1) mittels einer Durchgangsaussparung (19) verbunden sind.

6. Bohrkopf gemäß Anspruch 5, **dadurch gekennzeichnet, dass** die Aussparungen der Schrauben (8) und der Ritzel (10), welche die Ritzel (10) umgeben, mittels einer Scheibe (20), sich an der entsprechenden Seite desjenigen Ritzels (10) abstützt, das an dem freien Ende von einer der Schrauben (8) montiert ist, verschlossen sind.

7. Bohrkopf gemäß Anspruch 1, **dadurch gekennzeichnet, dass** die einzelne Spannmittelvorrichtung, die simultan auf die zwei Kulissenschieber (3) und den Körper (1) einwirkt und die das Mittel (5) für die Blockierung von besagten Kulissenschiebern (3) in der Arbeitsposition bildet, durch eine Schraube (21), die senkrecht die Aussparung (2) und die Kulissenschieber (3) durchgreift und einen Kopf (21') mit einem konischen Abschnitt, der mit einer Senkung (22) in einem der Teile des Körpers (1), der die Aussparung (2) begrenzt, zusammenwirkt, aufweist, durch einen Schrumpfring (23), der sich unter dem Kopf (21') der Schraube (21) abstützt und an seinem gegenüberliegendem Ende mit einem der Kulissenschieber (3) kooperiert, und durch eine Schraubenmutter (24) mit einem konischen Abschnitt, die einerseits mit einer Senkung (25) des anderen der Teile des Körpers (1) zusammenwirkt und das die Aussparung (2) begrenzt, und andererseits an mit seinem Ende, das der Senkung (25) gegenüberliegt, mit dem anderen Kulissenschieber (3) kooperiert, gebildet wird.

8. Bohrkopf gemäß Anspruch 7, **dadurch gekennzeichnet, dass** der Schrumpfring (23) derart montiert ist, dass er auf der Schraube (21) frei rotieren kann, und mit zwei diametral gegenüberliegenden Abflachungen (23') versehen ist, die dazu bestimmt sind, mit den Flächen (26') eines Durchgangslochs (26) des länglichen Abschnitts, dessen Länge leicht den Durchmesser des Rings (23) übertrifft, zusammenzuwirken.

9. Bohrkopf gemäß einem beliebigen der Ansprüche 7 und 8, **dadurch gekennzeichnet, dass** der Schrumpfring (23) an seinem Ende, das dem Kopf der Schraube (21') gegenüberliegt, mit zwei schrägen Abflachungen (27) versehen ist, die um 90° bezogen auf die Abflachungen (23') verdreht sind und mit Fasen (28) mit der selben Neigung, die auf der korrespondierenden Seite des entsprechenden Kulissenschiebers (3) am Umfang eines Langlochs (29) für den Durchgang der Schraube (21) vorgesehen sind, zusammenwirken.

10. Bohrkopf gemäß Anspruch 9, **dadurch gekennzeichnet, dass** die Schraubenmutter (24) mit einem konischen Abschnitt (24') versehen ist, der mit dem Boden der Senkung (25) zusammenwirkt, und unter besagtem konischen Abschnitt (24') diametral gegenüberliegende Abflachungen (30) umfasst, die für den Eingriff mit den Flächen (31') eines Durchgangslochs (31) des länglichen Abschnitts bestimmt sind, dessen Länge leicht den Durchmesser der Schraubenmutter (24) unter dem konischen Abschnitt (24') überschreitet.

11. Bohrkopf gemäß einem beliebigen der Ansprüche 7 und 10, **dadurch gekennzeichnet, dass** die Schraubenmutter (24) an ihrem Ende, das dem konischen Abschnitt (24') gegenüberliegt, mit zwei abgeschrägten Abflachungen (32) versehen ist, die um 90° bezogen auf die Abflachungen (30) verdreht sind und mit Fasen (28) mit der selben Neigung, die auf der korrespondierenden Seite des entsprechenden Kulissenschiebers (3) am Umfang eines Langlochs (29) für den Durchgang der Schraube (21) vorgesehen sind, zusammenwirken.

12. Bohrkopf gemäß einem beliebigen der Ansprüche 9 und 11, **dadurch gekennzeichnet, dass** das Langloch (29) der Kulissenschieber (3) eine Länge aufweist, die größer als der Durchmesser der Schraube (21) ist, und auf die Weise eine Abfederung der Kulissenschieber (3) bezogen auf die Schraube (21) entlang der Längsachse des Körpers (1) erlaubt.

13. Bohrkopf gemäß einem beliebigen der Ansprüche 7 und 10, **dadurch gekennzeichnet, dass** die Senkungen (22 und 25) für die Aufnahme des Kopfes der Schraube (21') und der Schraubenmutter (24) eine Fase mit einem gewölbten Boden aufweisen, die dazu bestimmt ist, in die konischen Abschnitte, die mit den Schraubenköpfen (21' und 24') der Schraubenmutter (24) korrespondieren, einzugreifen.

14. Bohrkopf gemäß Anspruch 1, **dadurch gekennzeichnet, dass** der Körper (1) außerdem mit einer zentralen Schmiervorrichtung ausgestattet ist, die durch Kanäle (33), die in besagten Körper (1) gebohrt sind und zum vorderen Ende von diesem letzteren nahe von Spanplättchen (3') der Kulissenschieber (3) hinführen, gebildet ist, wobei besagte Kanäle (33) an dem hinteren Ende des Körpers (1) mit einem zentralen Versorgungskanal (34) verbunden sind.
